(19) Europäisches Patentamt
European Patent Office
Office européen des brevets

(11) Publication number: **0 683 177 A2**

# (12) EUROPEAN PATENT APPLICATION

(21) Application number: **95106976.4**

(51) Int. Cl.[6]: **C08F 8/12**, C08F 8/32

(22) Date of filing: **09.05.95**

(30) Priority: **16.05.94 JP 101203/94**

(43) Date of publication of application:
**22.11.95 Bulletin 95/47**

(84) Designated Contracting States:
**DE FR GB IT**

(71) Applicant: **MITSUBISHI CHEMICAL CORPORATION**
**5-2 Marunouchi 2-chome**
**Chiyoda-ku,**
**Tokyo 100 (JP)**

(72) Inventor: **Suzuki, Masashi, c/o Research and Development Dept**
**Yokkaichi Chemical Company Limited**
**710 Oaza-Rokuromi,**
**Yokkaichi,**
**Mie 510 (JP)**
Inventor: **Kuramochi, Mayumi, c/o Tsuluba Research Center**
**Mitsubishi Chemical Corporation,**
**3-1, Chuo 8-chome**
**Ami-machi,**
**Inashiki-gun,**
**Ibaragi-ken (JP)**
Inventor: **Ohnuma, Yoshinobu, c/o Tsuluba Research Center**
**Mitsubishi Chemical Corporation,**
**3-1, Chuo 8-chome**
**Ami-machi,**
**Inashiki-gun,**
**Ibaragi-ken (JP)**
Inventor: **Kanayama, Kaoru, c/o Tsuluba Research Center**
**Mitsubishi Chemical Corporation,**
**3-1, Chuo 8-chome**
**Ami-machi,**
**Inashiki-gun,**
**Ibaragi-ken (JP)**

(74) Representative: **TER MEER - MÜLLER - STEINMEISTER & PARTNER**
**Mauerkircherstrasse 45**
**D-81679 München (DE)**

## (54) Acidic amino acid resin.

(57) An acidic amino acid resin having high biodegradability and being utilizable as a thickening agent, a water-absorbing resin and so on is obtainable by hydrolyzing, with an alkali metal compound, an anhydrous poly(acidic amino acid) partially cross-linked with polyamine obtained by polymerization of acidic amino acid such as aspartic acid.

EP 0 683 177 A2

## Technical Field

The present invention relates to a novel hydrophilic resin. In particular, it relates to an acidic amino acid resin derived from anhydrous poly(acidic amino acid), having high biodegradability, and being utilizable as a thickening agent, a water-absorbing resin and so on, and a production method thereof.

The acidic amino acid resin of the present invention can be used as thickening agents for various polymeric emulsions, latices and so on, or as a water-absorbing resin which is useful as disposable hygienic materials, domestic utilities, waterstop materials, soil conditioners, dropwise condensation-preventive agents and so on.

## Background Art

Various hydrophilic resins have been hitherto known, such as polyvinyl alcohol, polyethylene oxide, poly(sodium acrylate). As cross-linked resins to be used as water-absorbing resins, for example, there are known cross-linked carboxymethyl cellulose, partially cross-linked polyethylene oxide, hydrolysate of starch-acrylonitrile graft copolymer, partially cross-linked polyacrylate, vinyl alcohol-acrylate copolymer and so on.

However, any of these resins does not necessarily has sufficient performance. They have had problems that the water absorption property or the water retention ability under a pressurized state is low, or that they remain in a natural environment upon disposal after use because of their low biodegradability and give loads to the environment.

On the other hand, it is known for the acidic amino acid resin that a polymer of hydroxylalkylamide produced by a reaction of amino-alcohol with acidic amino acid has a property as a plasma-supplementing agent (Japanese Patent Publication No. 48-20638), and that polyaspartic acid is used as an inhibitor for calcium carbonate and calcium phosphate (Japanese Patent Laid-open No. 5-506615).

## Disclosure of the Invention

It is an object of the present invention to provide a novel hydrophilic resin having a main chain of amino acid polymer having biodegradability for which various industrial applications are expected, and a production method thereof.

Accordingly, the present invention provides an acidic amino acid resin which is obtainable by hydrolyzing an anhydrous poly(acidic amino acid) partially cross-linked with polyamine, and a production method thereof.

The anhydrous poly(acidic amino acid) is produced by heat condensation of acidic amino acid, namely monoamino-dicarboxylic acid such as aspartic acid, glutamic acid or a mixture thereof, in the presence or absence of phosphoric acid (see Japanese Patent Publication No. 48-20638; P. Neri et al., J. Med. Chem., 16, 893 (1973) and so on). The reaction to produce poly(acidic amino acid) by hydrolyzing the anhydrous poly(acidic amino acid) is known. These reactions are represented as follows for aspartic acid:

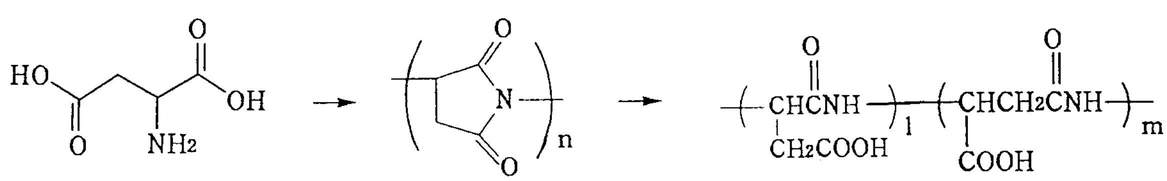

The degree of polymerization of the anhydrous poly(acidic amino acid) depends on the temperature of the heat condensation, the dehydrating agent such as phosphoric acid, polyphosphoric acid and soon, and the pressure (degree of reduced pressure). However, the average of the degree of polymerization is generally in a range of 10-100,000, preferably 100-100,000, most preferably 200-100,000.

It is postulated that the partially cross linked anhydrous poly(acidic amino acid) with polyamine is formed, when polyamine in an amount less than an equivalent amount is used, such that one amino group of polyamine makes an addition reaction with an acid anhydride group of the anhydrous poly(acidic amino acid) to open the anhydride ring, while a residual amino group makes an addition reaction with another acid anhydride group in the same manner to open the ring. It is assumed that this process proceeds in accordance with the following formula, as represented by a reaction between anhydrous polyaspartic acid

and a divalent amine.

This reaction proceeds very quickly. The completion of the reaction can be easily known according to the disappearance of free polyamine.

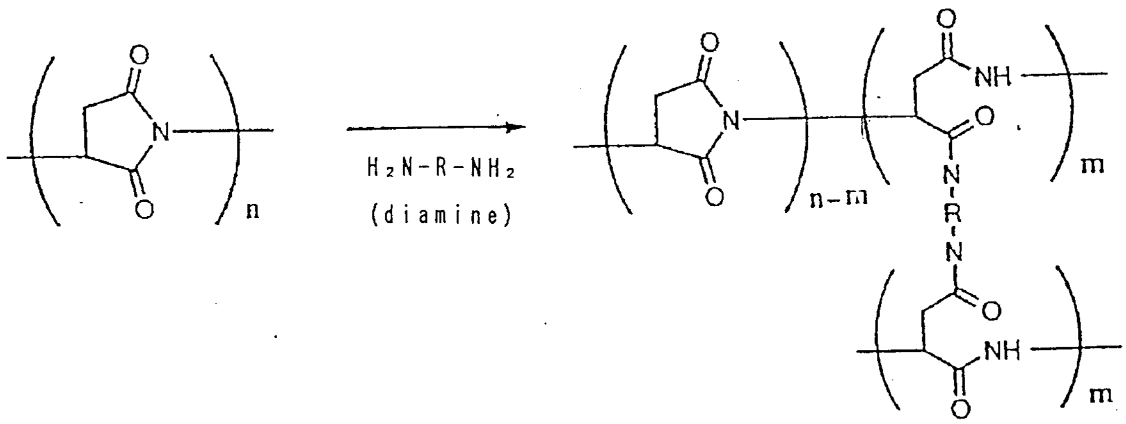


The amount of the polyamine to be used is suitably selected to produce a product having a partial cross-linking density corresponding to the purpose within a range less than 1 equivalent, usually not more than 0.9 equivalent, preferably 0.0001-0.5, most preferably 0.001-0.4, equivalent of the amino group of the polyamine with respect to 1 equivalent of the imide ring group of the anhydrous poly(acidic amino acid). The properties of the resin of the present invention depends on the molecular weight and the cross-linking density of the poly(acidic amino acid).

When the cross-linking density is small, a water soluble resin is provided, and the resin forms a swelling gel. When the cross-linking density is large, the resin has high strength or rigidity wherein the water-absorbing ability is lowered. When the cross-linking density is excessively high, the entire reaction system forms a gel, and the hydrolysis reaction operatively lowers, which is not preferable.

Any polyamine having two or more amino groups in its molecule can be used as the polyamine of the present invention for the cross-linking agent, including, for example, linear aliphatic polyamines such as ethylenediamine, diethylenetriamine, triethylenetetramine, tetraethylenepentamine, pentaethylenehexamine, hexamethylenediamine, and polyetherpolyamine; cyclic aliphatic polyamines such as menthenediamine, isophoronediamine, bis(4-aminocyclohexyl)methane, and 3,9-bis(3-aminopropyl)-2,4,8,10-tetraoxaspiro[5,5]-undeca ne; aliphatic aromatic polyamines such as m-xylylenediamine and p-xylylenediamine; aromatic polyamines such as metaphenylenediamine, 4,4'-methylenedianiline, and diaminodiphenylsulfone; polyamides obtained from dimeric acid and aliphatic polyamine; and basic amino acids such as lysine.

Among them, the aliphatic polyamine is preferred from viewpoints of reactivity and biodegradability.

The cross-linking reaction is performed by mixing predetermined amounts of anhydrous poly(acidic amino acid) and polyamine as they are or in a solvent, and optionally heating them. The reaction temperature is 0-200 °C, preferably low temperature, in order to avoid degradation of the main chains of the anhydrous poly(acidic amino acid), specifically not more than 80 °C, usually room temperature with agitation for 0.01-24 hours.

As for the reaction solvent, it is possible to use dimethylformamide(DMF), dimethylsulfoxide(DMSO), N-methylpyrrolidone, or a mixed solvent thereof. The solvent is used in an amount of 1-10 parts by weight, preferably 3-50 parts by weight with respect to 1 part by weight of the anhydrous poly(acidic amino acid).

The acidic amino acid resin of the present invention is produced by hydrolyzing unreacted imide rings of the partially cross-linked substance obtained by the aforementioned process with an alkaline metal compound. In the hydrolysis reaction, the reaction mixture produced by the aforementioned partial cross-linking reaction may be subsequently subjected to the hydrolysis reaction as it is. Alternatively, the partially cross-linked anhydrous poly(acidic amino acid) may be isolated by precipitating the reaction mixture with water, methanol, ethanol, acetone, ethyl ether, ethyl acetate, dioxane, chloroform or the like, and it may be subjected to the hydrolysis reaction as it is or after being dissolved in a suitable solvent.

The hydrolysis reaction is performed, for example, such that an aqueous alkaline solution is added dropwise to the reaction mixture after the cross-linking reaction, or the isolated partially cross-linked substance is added to an aqueous alkaline solution at 0-100 °C, preferably 20-50 °C for 0.5-24 hours.

Preferably hydroxide or carbonate is used as the alkali metal compound. Generally an aqueous solution of sodium hydroxide is used at a concentration of 0.1-40 % by weight. The amount of the alkali metal compound to be added is 0.2-2.0 mol per 1 mol of the imide ring group of the partially cross-linked substance. The amount of water to be used is 1-200 parts by weight per 1 part by weight of the partially cross-linked substance. As the hydrolysis reaction proceeds, the reaction system changes from a state in which the partially cross-linked substance is dispersed in the alkaline solution to a state in which transparent swelling gel is dispersed in the alkaline solution. The completion of the hydrolysis reaction can be known from the fact that the dispersion of the partially cross-linked substance disappears to provide a homogeneous system. In addition, confirmation can be also made by using IR spectrum according to disappearance of the absorbance at 1710 $cm^{-1}$ of the imide ring.

The acidic amino acid resin is isolated after the completion of the reaction by introducing the reaction mixture into a large amount of methanol, ethanol, acetone or the like, and precipitating, or by evaporating water and organic solvents to give a dry solid.

The obtained acidic amino acid resin is a white or yellow solid which is soluble or swells in water. It is usually insoluble in organic solvents, and does not melt even after heating.

## Best Mode for Carrying Out the Invention

The present invention will be more specifically explained below with reference to Examples. In the following Examples, the water-absorbing ability of the resin was calculated in accordance with the following equation, wherein 100 ml of an 0.9 % sodium chloride aqueous solution was added to a 200 ml beaker, 0.5 g of a resin was added thereto and agitated, which was then kept still at room temperature for 30 minutes, followed by collection of swelled gel of the resin by filtration under a pressurized pressure.

$$WA = (GW - AR) / AR$$

wherein;

WA: water absorbing ability
GW: gel weight (g)
AR: amount of water-absorbing resin (g)

### [Reference Example]

L-Aspartic acid (100 g) and phosphoric acid (50 g) were charged to an egg-plant shape flask (2 L), and reacted for 3.5 hours at a bath temperature of 180 °C under a reduced pressure of about 5 mmHg while making rotation using a rotary evaporator. As the reaction proceeded, the contents changed from a syrupy heterogeneous system to a glassy solid.

After completion of the reaction, DMF (400 ml) was added to the egg-plant shape flask, and the pale brown glassy product was homogeneously dissolved at a bath temperature of 120 °C. The produced resin was precipitated again by adding an obtained solution dropwise to pure water (1.5 L), and then slurry was ground with a mixer to filter under a reduced pressure. The filtration was followed by rinse with pure water until the filtrate became neutral. The cake obtained by the filtration was then dried with hot air at 150 °C for 24 hours to obtain 71.2 g of anhydrous poly(acidic amino acid) in a white powdery state (yield: 97.8 %). The average of the degree of polymerization was about 1000 as measured by GPC.

### [Example 1]

The anhydrous poly(acidic amino acid) (3 g) obtained in Reference Example was dissolved in DMF (20 g). A solution obtained by dissolving hexamethylenediamine (12 mg, 0.103 mmol) in DMF (10 g) was added thereto, to make agitation at room temperature for 10 hours.

The reaction mixture was then added dropwise to 400 g of water. An obtained precipitate was filtrated under a reduced pressure, thereafter washed with water, and dried with hot air at 100 °C for 16 hours to obtain 2.9 g of partially cross-linked anhydrous poly(acidic amino acid).

The partially cross-linked substance (2 g) was added to a solution in which sodium hydroxide (0.8 g) was dissolved in water (100 g). A viscous liquid was obtained by agitating the substance solution at room temperature for 3 hours to make a hydrolysis. Methanol (600 ml) was added to the liquid to produce a precipitate, and the produced precipitate was filtrated under a reduced pressure, followed by washing with methanol and drying at 60 °C for 12 hours under a reduced pressure to obtain 1.6 g of a white powdery

resin.

The resin was soluble in water, and the viscosity of its aqueous solution (0.5 g/100 g) was 220 cps (E type viscometer, 25 °C). It was insoluble in acetone and toluene, did no melt upon heating, and had a temperature for starting thermal decomposition of 274 °C as measured in air at a temperature-raising rate of 10 ° C/minute using a thermogravimetric analyzer.

[Comparative Example 1]

A resin (1.3 g) was obtained in the same manner as Example 1 except that the anhydrous poly(acidic amino acid) (2 g) was subjected to the hydrolysis reaction as it was without performing the partial cross-linking reaction.

The viscosity of an aqueous solution of the resin (1 g/100 g) was not more than 10 cps (25 °C).

[Example 2]

Partially cross-linked anhydrous poly(acidic amino acid) (2.8 g) was obtained in the same manner as Example 1 except that the amount of hexamethylenediamine was changed to 54 mg (0.465 mmol). The partially cross-linked substance (2 g) was subjected to the hydrolysis reaction in the same manner to obtain swelled gel which was dried in the same manner to obtain 1.9 g of a white powdery resin.

The resin swelled in a 0.9 % NaCl aqueous solution. It was insoluble in toluene, did not melt upon heating, and had a temperature for starting thermal decomposition of 280 °C.

The resin had a water-absorbing ability of 49 g/g in a 0.9 % NaCl aqueous solution.

[Example 3]

A white powdery resin (2.0 g) was obtained in the same manner as Example 2 except that 3,9-biS(3-aminopropyl)-2,4,8,10-tetraoxaspiro[5,5]undeca ne (125 mg, 0.456 mmol) was used instead of hexamethylenediamine.

The resin swelled in a 0.9 % NaCl aqueous solution. It was insoluble in toluene, did not melt upon heating, and had a temperature for starting thermal decomposition of 275 °C.

The resin had a water-absorbing ability of 45 g/g.

[Example 4]

A white powdery resin (2.0 g) was obtained in the same manner as Example 2 except that the amount of hexamethylenediamine was changed to 89 mg (0.766 mmol).

The resin swelled in a 0.9 % NaCl aqueous solution. It was insoluble in toluene, did not melt upon heating, and had a temperature for starting thermal decomposition of 283 °C.

The resin had a water-absorbing ability of 29 g/g.

[Example 5]

A white powdery resin (2.3 g) was obtained in the same manner as Example 2 except that the amount of hexamethylenediamine was changed to 360 mg (3.1 mmol).

The resin slightly swelled in a 0.9 % NaCl aqueous solution. It was insoluble in toluene, did not melt upon heating, and had a temperature for starting thermal decomposition of 283 °C.

The resin had a water-absorbing ability of 18 g/g. The water-absorbed gel was hardly collapsed even when it was depressed by fingers.

## Claims

1. An acidic amino acid resin which is obtainable by hydrolyzing an anhydrous poly(acidic amino acid) partially cross-linked with polyamine.

2. The resin according to claim 1, wherein the anhydrous poly(acidic amino acid) has an average of the degree of polymerization of 10-100,000.

3. The resin according to claim 2, wherein it has a cross-linking density of 0.01-50 % of imide ring groups of the anhydrous poly(acidic amino acid).

4. The resin according to claim 1, wherein the acidic amino acid is aspartic acid.

5. A method for producing poly(acidic amino acid) resins comprising the steps of making a partial cross-linking reaction of anhydrous poly(acidic amino acid) with polyamine to produce a partially cross-linked substance, and then hydrolyzing the obtained partially cross-linked substance with an alkaline metal compound.

6. The method according to claim 5, wherein 0.0001-0.5 equivalent of amino group of the polyamine is used for 1 equivalent of imide ring group of the anhydrous poly(acidic amino acid).